# EUROPEAN PATENT SPECIFICATION

(11) **EP 4 390 496 B1**
(45) Date of publication and mention of the grant of the patent: **06.08.2025**
(21) Application number: 22315339.6
(22) Date of filing: 20.12.2022
(51) Int. Cl.: G02B 21/06, G02B 21/36, G02B 21/10, G02B 21/12, G02B 21/14, G02B 21/16

(54) **A SYSTEM FOR COMBINING IMAGES OF A SAMPLE FROM DIFFERENT DIGITAL IMAGING DEVICES**
SYSTEM ZUM KOMBINIEREN VON BILDERN EINER PROBE AUS VERSCHIEDENEN DIGITALEN BILDGEBUNGSVORRICHTUNGEN
SYSTÈME POUR COMBINER DES IMAGES D'UN ÉCHANTILLON PROVENANT DE DIFFÉRENTS DISPOSITIFS D'IMAGERIE NUMÉRIQUE

(43) Date of publication of application: 26.06.2024
(73) Proprietor: HyprView, 14076 Caen Cedex 5 (FR)
(72) Inventor: AUVRAY, François, Caen (FR)
(74) Representative: HGF

(56) References cited:
- US-A1- 2016 245 833
- US-A1- 2021 350 112
- US-A1- 2022 054 011

## Description

This invention relates generally to sample imaging and more particularly to a system for combining images of a sample from different digital imaging devices, especially, but not exclusively, biological samples for medical or veterinary diagnostic purposes.

### BACKGROUND

It is known to view samples under microscopic imaging devices. Historically, biological samples have been prepared on standard format glass slides to be placed under bright light in the field of view of a conventional optical microscope, to be viewed manually by an operator. A single optical microscope device might include interchangeable lenses to view the sample at different magnifications. The lenses are focusable to ensure a clear image. Typically, under such conventional microscopy, the operator views only a small portion of the whole sample at a time, and aligns the slide under the point of focus in order to view a different portion of the sample on the slide. There are many classes of optical microscopes, which can generally be differentiated according to their observation methods, including: bright field microscopes; dark field microscopes; phase difference microscopes; polarized light microscopes; interference microscopes; confocal microscopes; hyperspectral microscopes; and fluorescent microscopes. Each such microscope can use either a transmission or reflection approach: in a transmission microscope, the incident light passes through a transparent sample; whereas in a reflection microscope, the light source illuminates non-transparent samples from above, with the reflected light being collected by the lens.

Digital microscopes (or imaging systems) combine a traditional optical microscope with digital image capture means - such as a digital camera, a CCD or a CMOS device - and digital processing technology, all typically under a centralised computer control.

'Whole Slide Imaging' (WSI) comprises digitally capturing an image of a whole sample on a slide at once using high-speed, high-resolution digital equipment, in a format that allows the image to be viewed on a computer monitor. An operator viewing the resulting digital image can zoom in on the image and pan the image to focus on particular areas of interest.

Some imaging devices can be operated remotely, under computer control. For example, some microscopic imaging devices available on the market can be controlled either manually or via a computer connected by a wired network to the various devices making up the device. These approaches limit the use of the device to those physically present in the location where the device is housed and force potential users to acquire equipment and/or travel to a location with the equipment.

Whether they are designed to operate automatically or require the intervention of an operator, commercial microscopes today are designed and developed to perform a single, specific task. Accordingly, such microscopes can operate using only one, or at most a few imaging modalities. This makes it complex, sometimes impossible, to exploit the potential of a multimodal analysis using several different microscopy techniques. One primary obstacle to combining images from microscopes with different specifications is that it is necessary to associate and recalibrate their respective data sets. As such, the final consistency of the resulting combined data set is only partial because it is significantly affected by the biases induced by the multitude of sources.

In pathology, it can be useful to analyse a single sample using different imaging modalities. By way of just one example, analysis of hepatic tissue specimens is important for diagnosis of the presence and severity of liver diseases, both for clinical practice and research purposes, and by imaging a hepatic tissue specimen under different imaging modalities, different aspects of the histology may be highlighted, with some imaging modalities being better for showing e.g. cancerous tissue than others, whilst yet other imaging modalities may be better for showing fatty tissue. By way of another example, diabetes characterized by the presence of collagen in the liver can be diagnosed using two imaging techniques on the same organ.

US 2022/054011 A1 discloses a multimodal imaging platform for imaging a sample with multiple imaging modalities using the same imaging system layout. The system includes a sample stage that is translatable on the platform so as to position the sample at either a first region (for a first imaging modality) or a second region (for a different imaging modality).

US 2016/245833 A1 discloses an automated system of processing biological specimens, which includes a sample storage module and automated sample handling via robot.

US 2021/350112 A1 teaches a slide handler for automated movement of slides between various stations of an imager, to generate a whole image of a specimen affixed to a slide.

Thus it is known in the field of microscopy to combine a multitude of imaging modalities from different imaging techniques. However, this makes it difficult to aggregate and combine measurements from different sources without loss and degradation of information. For example, in order to benefit from the advantages of multimodal imaging, it is useful to superimpose images captured using those various different imaging modalities. To date, such superimposition of images has been carried out manually, e.g. by physical manual overlay of one image over another or using digital image manipulation to superimpose one image on another, in each case with the operative aiming to align the images by sight so that they are in registration. Such techniques have the disadvantage of not being scalable or repeatable because the registration remains very approximate. Moreover, it is a complex process because of the heterogeneity of the various imaging devices, such as microscopes of various differing optics, and scanners. This complexity particularly affects the efficiency of multimodal analyses and induces limitations in the development of predictive algorithms. For an improved diagnostic process, which may incorporate aspects of.Al and associated algorithms for automatically identifying aspects of interest within datasets collated from the captured images, it is envisaged that hundreds of images may be analysed.

It is an object of the invention to address at least some of these identified difficulties.

### BRIEF SUMMARY OF THE DISCLOSURE

In accordance with the present invention there is provided an imaging system for capturing different images of a sample, as defined in independent claim 1. Preferred embodiments are defined in the dependent claims.

Advantageously, this technique facilitates the automated capture of images from different imaging devices on a common platform to provide efficient production of multimodal digital images from samples, thereby improving accuracy and throughput, hence improved diagnostic outcomes. The system avoids difficulties of the prior approaches by this provision of different, interoperable imaging devices on a common platform, thereby generating coherent, calibrated and exploitable data sets based on the captured digital images without the need to carry out prior processing.

The first imaging device may comprise one of: UV, visible, IR and multispectral brightfield microscopy / UV, visible, IR and multispectral darkfield microscopy / UV, visible, IR and multispectral phase contrast microscopy / UV, visible, IR and multispectral differential interference contrast microscopy / UV, visible, IR and multispectral epi-fluorescence widefield microscopy / UV, visible, IR absorption microspectrophotometry / UV, visible, IR absorption microspectrophotometry / UV, visible, IR scattering microspectrophotometry / UV, visible, IR hyperspectral interferometric microscopy / confocal fluorescence microscopy, confocal hyperspectral fluorescence microscopy, confocal Raman microspectroscopy, confocal reflectance microspectroscopy, fluorescence lifetime confocal microscopy / fluorescence lifetime widefield microscopy / two and three photons excitation fluorescence microscopy / two and three photons excitation fluorescence lifetime microscopy / Coherent anti-Stokes Raman scattering microscopy / two (and three) photons second (and third) harmonic generation microscopy / stimulated Raman scattering microscopy, Scanning Electron Microscopy / X ray fluorescence microscopy.

The second imaging device may comprise one of: UV, visible, IR and multispectral brightfield microscopy / UV, visible, IR and multispectral darkfield microscopy / UV, visible, IR and multispectral phase contrast microscopy / UV, visible, IR and multispectral differential interference contrast microscopy / UV, visible, IR and multispectral epi-fluorescence widefield microscopy / UV, visible, IR absorption microspectrophotometry / UV, visible, IR absorption microspectrophotometry / UV, visible, IR scattering microspectrophotometry / UV, visible, IR hyperspectral interferometric microscopy / confocal fluorescence microscopy, confocal hyperspectral fluorescence microscopy, confocal Raman microspectroscopy, confocal reflectance microspectroscopy, fluorescence lifetime confocal microscopy / fluorescence lifetime widefield microscopy / two and three photons excitation fluorescence microscopy / two and three photons excitation fluorescence lifetime microscopy / Coherent anti-Stokes Raman scattering microscopy / two (and three) photons second (and third) harmonic generation microscopy / stimulated Raman scattering microscopy, Scanning Electron Microscopy / X ray fluorescence microscopy, different to the first.

The system may further comprise a sample retention mechanism. The sample retention mechanism may comprise a sample slide holder.

The imaging devices may each be located at discrete positions on a single planar surface. Thus, the imaging devices may be fixed on a common surface thereby having a defined spatial relationship and facilitating the manoeuvre of samples in the system.

The system may further comprise a sample storage area. The sample storage are may be fixed to the common surface too, ensuring ease of transport of the samples therefrom to the different image capture devices.

The system comprises a pick and place robot for selectively gripping and moving a selected sample to a desired location, under the control of the processor.

According to one embodiment, the pick and place robot is for selectively moving the selected sample from the sample storage area to the mechanism for translating the sample relative to each of the first and second imaging devices. This provides a convenient mechanism for automatically retrieving a selected sample from the sample storage area for onward distribution to the image capture devices on the separate mechanism for translating the sample.

According to an alternative embodiment, the pick and place robot itself comprises the mechanism for translating the-sample relative to each of the first and second imaging devices and is thus for selectively moving the sample from the sample storage area directly to the first and second imaging devices.

In some embodiments, the system further comprises a sample support associated with each imaging device for receiving the selected sample and for positioning the sample at a specified X-Y position in the field of view of the imaging device. The sample support may comprise a double stage sample support for lateral X-Y positioning of the sample at a first resolution on the first stage and at a second resolution, finer than the first, on the second stage.

The sample includes a calibration symbol and the processor is further configured to combine the first and second digital images of the sample by:
receiving a first digital image of the calibration symbol from the first imaging device;
receiving a second digital image of the calibration symbol from the second imaging device;
comparing the position of the first digital image of the calibration symbol with the position of the second digital image of the same calibration symbol, thereby determining an image offset between the different imaging devices;
translating the second digital image of the sample by the determined offset; and
superimposing the first digital image of the sample and the translated second digital image of the sample, whereby the first image is in registration with the second image.

Advantageously, this technique facilitates automated registration of images from different imaging devices to provide efficient production of composite multimodal images, thereby improving accuracy and throughput, hence improved diagnostic outcomes.

The sample may comprise a biological sample. Image capture as provided by the invention is particularly beneficial in the field of biological samples, whereby different imaging modalities can each highlight different aspects of interest in the sample so as to provide a holistic diagnosis taking into account those different aspects.

The sample may be on a sample slide. A sample slide is a convenient and common platform in the art for handling a specimen for imaging.

### BRIEF DESCRIPTION OF THE DRAWINGS

Embodiments of the invention are further described hereinafter with reference to the accompanying drawings, in which:
Figure 1 is a schematic plan view of an imaging system according to an aspect of the invention;
Figure 2 illustrates a microscopy slide containing a biological sample;
Figure 3 illustrates the slide of Fig. 2 additionally including a calibration symbol in the form of a pair of targets on opposed ends of the slide;
Figure 4a illustrates a first digital image of the calibration symbol of the slide of Fig. 3 captured using a first imaging device;
Figure 4b illustrates a second digital image of the calibration symbol of the slide of Fig. 3 captured using a second imaging device;
Figure 5a illustrates a first digital image of the sample of the slide of Fig. 3 captured using the first imaging device using a first imaging modality;
Figure 5b illustrates a second digital image of the sample of the slide of Fig. 3 captured using the second imaging device using a second imaging modality, different to the first;
Figure 6 illustrates a raw resulting superimposition of the first and second digital images prior to XY correction;
Figure 7 illustrates an XY offset of the second image relative to the first; and
Figure 8 illustrates a composite of the first and second images in registration after correction of the determined XY offset.

### DETAILED DESCRIPTION

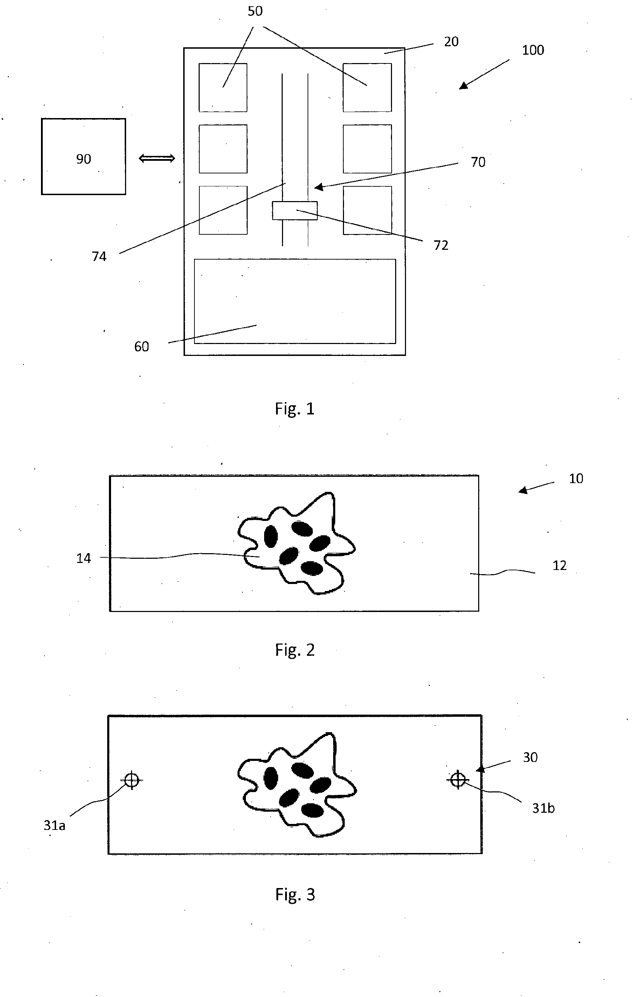

Figure 1 illustrates, in schematic form, a system 100 for combining images of a sample taken using different imaging devices. The system comprises a support 20 on which are arranged a plurality of imaging devices 50, each of which may be configured to capture images according to a different imaging modality. The support 20 may comprise a planar surface, such as a table top. The surface may be approximately 1m x 2m. Samples to be imaged are stored in a sample storage area 60, which is also fixed on the surface. A sample handling mechanism 70 comprises a sample holder 72 or carriage onto which individual samples 10 (see Figs. 2 & 3) can be placed. The sample holder 72 is movable on a gantry 74 between the sample storage area 60 and any of the different imaging devices 50 in turn for the capture there of an image of the sample according to the image modality of the selected imaging device 50, as described in more detail below. A processor 90 is in operative communication with the imaging devices 50 and the sample handling mechanism 70 for the automated control of the system.

The sample holder 72 is loaded by using a pick and place robot having an end effector (e.g. a gripper, not shown) under control of the processor, to pick a selected sample from the storage area 60 and to place the selected sample 10 on the sample holder. The sample holder 72 may, in some embodiments, be capable of holding more than one sample - for example it may hold up to four samples 10. In some embodiments, the sample handling mechanism itself comprises a pick and place robot that is capable of picking samples from the sample storage area 60 and delivering them directly to a selected image capture device 50, all under the control of the processor 90.

Examples of the different imaging modalities that the respective different image capture devices 50 may use include: a digital camera; a microscope (e.g. digital optical microscopes of differing magnification, a scanning electron microscope, confocal microscope, ... ); a scanner; any of which may be configured to capture light in the visible, infrared (IR) or ultraviolet (UV) spectrum; an X-ray device; thus, but not exclusively: UV, visible, IR and multispectral brightfield microscopy / UV, visible, IR and multispectral darkfield microscopy / UV, visible, IR and multispectral phase contrast microscopy / UV, visible, IR and multispectral differential interference contrast microscopy / UV, visible, IR and multispectral epi-fluorescence widefield microscopy / UV, visible, IR absorption microspectrophotometry / UV, visible, IR absorption microspectrophotometry / UV, visible, IR scattering microspectrophotometry / UV, visible, IR hyperspectral interferometric microscopy / confocal fluorescence microscopy, confocal hyperspectral fluorescence microscopy, confocal Raman microspectroscopy, confocal reflectance microspectroscopy, fluorescence lifetime confocal microscopy / fluorescence lifetime widefield microscopy / two and three photons excitation fluorescence microscopy / two and three photons excitation fluorescence lifetime microscopy / Coherent anti-Stokes Raman scattering microscopy / two (and three) photons second (and third) harmonic generation microscopy / stimulated Raman scattering microscopy, Scanning Electron Microscopy / X ray fluorescence microscopy.

As best shown in Fig. 2, a sample 10 may typically take the form of a microscopy slide 12, on which is placed a biological specimen 14, such as a tissue biopsy. It can be envisaged that other forms of sample retention other than a slide 12, such as a petri dish, may be employed instead.

In use, a sample 10 is translated to a selected image capture device 50 by the sample handling mechanism 70 under the control of the processor 90. At the selected image capture device 50, the sample is positioned in a field of view of the image capture device 50 by suitable manipulation of the sample holder 72. In some embodiments, the sample holder 72 is positioned on a sample stage (not shown) of the image capture device. The sample stage may be translatable within the image capture device 50 to accurately position the sample holder 72, ergo the sample 10, for a focused image of a desired portion of the sample. By way of example, the sample stage may comprise a double stage translation mechanism for X-Y (lateral, horizontal) positioning of the sample relative to the field of view; a first stage may be translated at a first resolution, such as a 1 micron resolution, in order to get the sample to an approximate X-Y position quickly; and a second stage, attached to the first stage, may be translated with a finer resolution, such as a 200 nm resolution for fine-tuned accurate final positioning. An auto-focus mechanism, as well known in the art, may be employed for adjustment of the Z (vertical) position of the sample 10 relative to the optical stage of the image capture device.

Once positioned at a first selected imaging device 50, a first digital image 36 of the sample 10 - or, more accurately, at least a portion of the specimen 14 (because the image may be taken of the entire slide, just a portion of the slide, or just a portion of the sample on the slide, depending on the situation and requirements) - can be captured and stored in a memory, such as a database, under the control of the processor 90. By way of example, the first digital image 36 of the sample may be a conventional visible light microscopic image at a given magnification of, say 20x. It will be understood that any suitable magnification may be used or indeed that other imaging modalities may be employed instead.

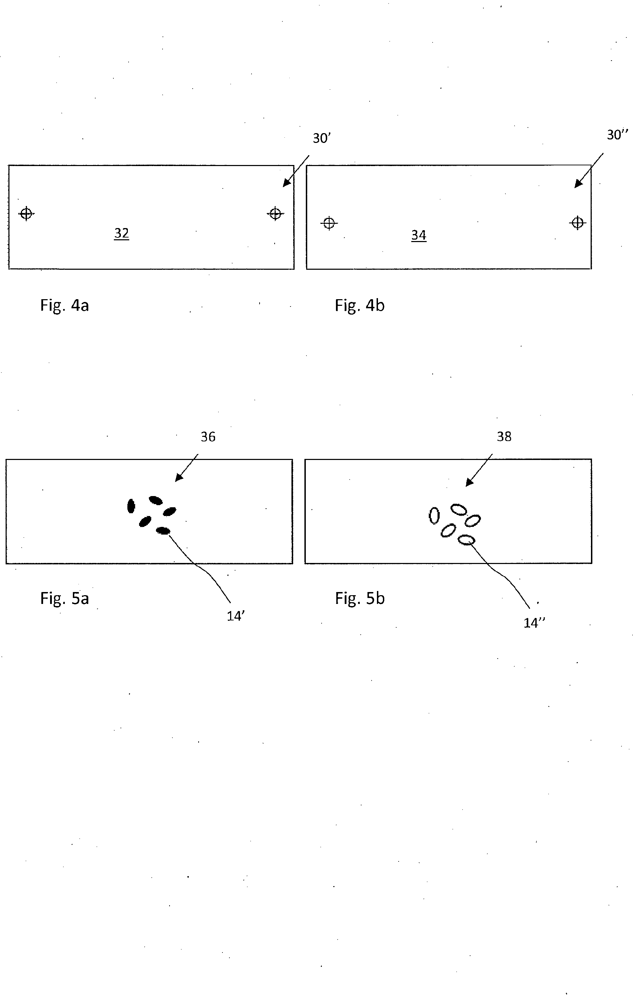

Then, the sample 10 is manoeuvred, by the sample handling mechanism 70, to a second selected imaging device 50, which is of a different imaging modality to the first imaging device. Thus, once accurately positioned at the second selected imaging device 50, a second digital image 38 of the sample 10 - or, more accurately, at least a portion of the specimen 14 - can be captured and stored under the control of the processor 90. By way of example, the second digital image 38 of the sample may be a fluorescent light microscopic image. It will be understood that any suitable magnification may be used or indeed that other imaging modalities may be employed instead. As seen in Figs. 5a and 5b, the first and second images 36,38 of the sample 10 may capture different aspects 14', 14" of the specimen, due to having been taken using different imaging modalities. Further images of the sample 10 may be captured at third and subsequent image capture devices 50 under further different imaging modalities.

To date, as explained in the introduction, capturing images of a sample using different imaging modalities has been difficult because it has required manual manipulation of the samples to move them from one imaging device to another, often in remote locations. That is thus not a scalable process due to the time and labour required. Furthermore, the images that are captured will necessarily be inconsistent because they are taken using separate image capture devices and the placement of the samples at each location involves so many variables. Thus, the present invention addresses this by introducing an automated process for the movement and positioning of the samples at the different image capture devices all on a common unitary platform. The system consists of a modular optical bench arranged on a single optical table associated with a robotic unit in charge of managing the movement of the samples. The uniqueness of the system facilitates a total control of the displacements of the samples and on their calibrations. This approach overcomes the limitations induced by the use of independent devices to perform measurements on the modalities of interest.

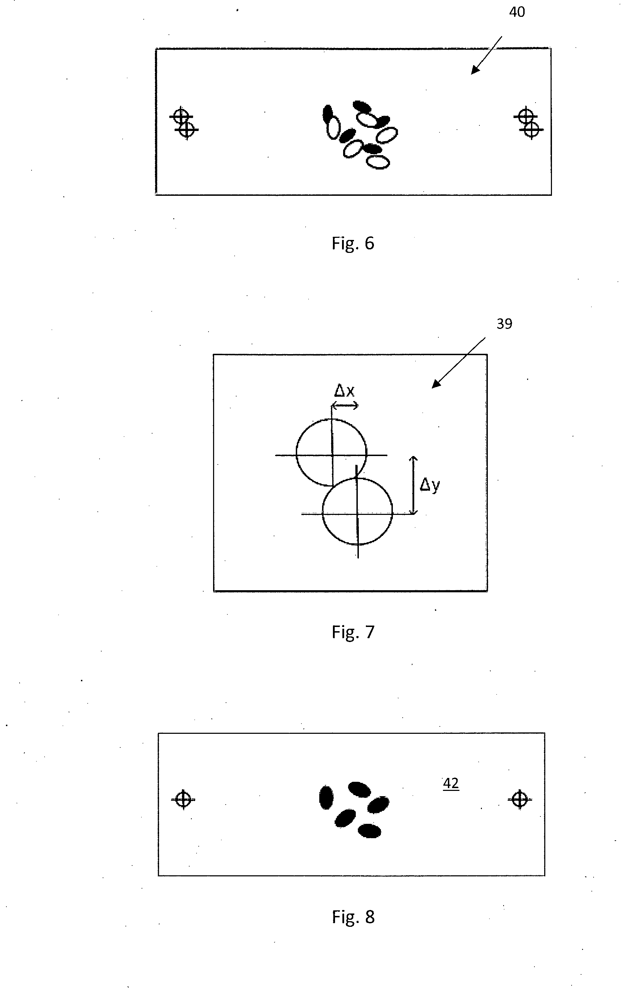

Images taken from the different imaging devices 50 may be combined to form a composite image. In a raw form, as shown in Fig. 6, the composite image 40 may be misaligned, due to possible differences between the position of the optical imaging stages of the respective image capture devices relative to the positioning of the sample 10 thereunder during image capture. In order to align the images captured using the various different imaging devices 50 so that the pixels of each digital image 36,38 are in registration with one another in the final composite image, a calibration step is needed to determine an offset 39 of the respective components of the composite image 40. Where the second image 38 is captured with a different magnification to the first image 36, a scaling step is also needed in order to combine the images.

To date, as explained in the introduction, combining images has been a manual and labour-intensive process, using either a physical manual overlay of one image over another or using digital image manipulation to superimpose one image on another, in each case with the operative aiming to align the images by sight so that they are in registration.

That is also not a scalable process due to the time and skill required to achieve accurate results. Thus, embodiments of the present invention address this by introducing an automated process for the alignment and registration of the respective images. Accordingly, each slide 12 may have printed, etched, adhered or otherwise deposited thereon a calibration symbol 30. The calibration symbol 30 may be in the form of a pair of target symbols 31a,b on opposed left- and right-hand sides of the slide 12. In other embodiments, only a single target 31 may be employed, or more than two targets 31 may be used.

Thus, at each image capture device 50, once the sample 10 has been positioned in the field of view by the sample handling mechanism 70 and, optionally, by translation of the sample stage, a digital image of the whole slide 12 including the calibration symbol 30 is captured. Examples are illustrated in Figs. 4a and 4b, which respectively show a first image 32 of the calibration symbol 30' as captured by the first image capture device, and a second image 34 of the calibration symbol 30" as captured by the second image capture device. These may be separate captures to those of the specimen 14 on the slide 12. For example, the images 32,34 of the whole slide 12 including the calibration symbol 30 may be captured using a conventional digital camera incorporated into each image capture device 50. Alternatively, the images of the calibration symbol 30',30" may be captured at the respective first and second imaging devices 50 using the native imaging modality that is used to capture the images of the specimen.

A separate image 36,38 of the specimen 14 may then be taken (or indeed may be taken first) using the specialised imaging modality of that particular image capture device. Because the digital camera is in a fixed position relative to the field of view of the specialised imaging modality, and because the calibration symbol 30 is fixed in position on the slide 12 relative to the specimen 14, if the image of the calibration symbol 30 as taken by a first imaging device 50 is aligned with the image of the calibration symbol 30 as taken by a second imaging device 50, then it can be assured that the respective images of the specimen 14 as captured by those first and second image capture devices will be in registration. This holds true even if the sample 10 is moved within the selected imaging device, e.g. by the sample stage, between capturing the image of the calibration symbol 30 and the image of the specimen 14, provided that the movement can be tracked accurately, e.g. by counting, in the processor 90, the number of nm steps that the stage has been translated. By having multiple targets, the calibration symbol 30 can more readily be used for accurate alignment and scaling of the images.

To this end, the first and second images 32,34 of the calibration symbol 30 (e.g. the targets 31a,b) are analysed by the image processor 90 and the relative positions of the symbols 30',30" in the images are determined. Thus, an offset 39 (see Fig. 7) can be determined. Typically, the offset 39 will be determined in terms of X and Y translations in a cartesian coordinate system of reference. However, it will be understood that the offset could be determined in other ways, such as by reference to a polar coordinate system. The offset 39 may be a translational offset or a rotational offset, or a combination thereof; thus, the offset can be considered as a rigid transformation.

Once the offset 39 has been determined, the second image 38 of the sample containing the specimen 14 may be translated by that offset so that the resulting composite image 42 (see Fig. 8) is in perfect registration - with the respective calibration symbols 30',30" from each of the first and second captures in alignment, and with the respective aspects 14',14'' of the specimen images likewise in alignment.

In summary, a multi-modal image capture process according to embodiments of the invention may thus comprise the steps of:
a. retrieving a sample 10 from the sample storage area 60, where the sample 10 includes a calibration symbol 30;
b. moving the sample relative to a first image capture device 50 to a position in a field of view of that image capture device;
c. using the first imaging device 50 to capture a first digital image 32 of a calibration symbol 30;
d. using the first imaging device 50 to capture a first digital image 36 of a sample 10 with a first imaging modality;
e. moving the sample relative to a second image capture device 50 to a position in a field of view of that second image capture device;
f. using the second imaging device 50 to capture a second digital image 34 of the calibration symbol 30;
g. using the second imaging device 50 to capture a second digital image 38 of the sample with a second imaging modality, different to the first;
h. comparing the position of the first digital image 32 of the calibration symbol with the position of the second digital image 34 of the same calibration symbol, thereby determining an image offset 39 between the first and second image capture devices;
i. translating the second digital image 38 of the sample 10 by the determined offset 39; and
j. superimposing the first digital image 36 of the sample 10 and the translated second digital image 38 of the sample, whereby the first image is in registration with the second image.

Alternatively, the imaging of the calibration symbol at each of the first and second image capture devices may take place first, before the imaging of the sample. Hence, in that alternative, a multi-modal image capture process according to the invention may thus comprise the steps of:
a. retrieving a sample 10 from the sample storage area 60, where the sample 10 may include a calibration symbol 30;
b. moving the sample relative to a first image capture device 50 to a position in a field of view of that first image capture device;
c. optionally using the first imaging device 50 to capture a first digital image 32 of a calibration symbol 30;
d. optionally moving the sample relative to a second image capture device 50 to a position in a field of view of that second image capture device;
e. optionally using the second imaging device 50 to capture a second digital image 34 of the calibration symbol 30;
f. optionally comparing the position of the first digital image 32 of the calibration symbol with the position of the second digital image 34 of the same calibration symbol, thereby determining an image offset 39 between the first and second image capture devices;
g. optionally moving the sample relative to a first image capture device 50 to a position in a field of view of that first image capture device;
h. using the first imaging device 50 to capture a first digital image 36 of a sample 10 with a first imaging modality;
i. moving the sample relative to a second image capture device 50 to a position in a field of view of that second image capture device;
j. using the second imaging device 50 to capture a second digital image 38 of the sample with a second imaging modality, different to the first;
k. optionally translating the second digital image 38 of the sample 10 by the determined offset 39; and
l. optionally superimposing the first digital image 36 of the sample 10 and the translated second digital image 38 of the sample, whereby the first image is in registration with the second image.

In some embodiments, where the calibration symbol 30 is visible under the imaging modality of the selected image capture device 50, an image of the whole slide 12, including the calibration symbol 30 and the specimen 14 may be taken in a single image capture. Thus, steps c and h on the one hand, and e and j on the other hand can be combined, and the associated movement steps d and g can be eliminated. A calibration symbol that is visible under all the imaging modalities of interest can be envisaged for this purpose.

Whereas the system and process has been described in terms of translating the sample 10 to the different image capture devices 50, it will be understood that the sample 10 may be retained in a static position and that the image capture devices 50 may be translated to an imaging position at the sample from respective non-imaging positions away from the sample location.

Where the term 'image capture' and analogues has been used, this encompasses not only the capture of a single digital image, but also the possibility that a plurality of images may be captured and processed in order to produce a single, final image. For example, more than a single image of the whole slide may be combined or interpolated, or multiple images of different or overlapping portions of the slide may be captured and a "stitching" algorithm be used which reconstructs a global scan of the whole sample.

Furthermore, whereas the system and method have been described in the context of biological samples, it will be understood that the samples that are imaged may be from other fields, such as (but not limited to): pharmacological, geological, semi-conductor or material samples.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification may be combined in any combination, except combinations where at least some of such features and/or steps are mutually exclusive. The invention is not restricted to the details of any foregoing embodiments, but modifications will be apparent to the skilled person. The scope of the invention is defined by the appended claims.

## Claims

1. An imaging system (100) for capturing different images of a sample (10) including a calibration symbol (30), comprising:
a first imaging device (50) for acquiring a first digital image (36) of the sample (10) with a first imaging modality;
a second imaging device (50) for acquiring a second digital image (38) of the sample (10) with a second imaging modality, different to the first;
a mechanism (70) for translating the sample relative to each of the first and second imaging devices (50) to position the sample, in turn, at an imaging position at each of the first and second imaging devices (50); and
a processor (90) configured to:
control the mechanism (70) for translating the sample (10);
receive the first digital image (36) of the sample (10) from the first imaging device (50); and
receive the second digital image (38) of the sample (10) from the second imaging device (50), said imaging system (100) comprising a pick and place robot for selectively gripping and moving a selected sample to a desired location, under the control of the processor (90), the sample including a calibration symbol (30) and the processor (90) being further configured to combine the first and second digital images (36,38) of the sample by:
receiving a first digital image (32) of the calibration symbol (30) from the first imaging device (50); receiving a second digital image (34) of the calibration symbol (30) from the second imaging device (50); comparing the position of the first digital image (32) of the calibration symbol with the position of the second digital image (34) of the same calibration symbol, thereby determining an image offset (39) between the different imaging devices; translating the second digital image (38) of the sample by the determined offset (39); and superimposing the first digital image (36) of the sample and the translated second digital image (38) of the sample, whereby the first image is in registration with the second image.

2. The system of claim 1, wherein the first imaging device (50) comprises one of: UV, visible, IR and multispectral brightfield microscopy / UV, visible, IR and multispectral darkfield microscopy / UV, visible, IR and multispectral phase contrast microscopy / UV, visible, IR and multispectral differential interference contrast microscopy / UV, visible, IR and multispectral epi-fluorescence widefield microscopy / UV, visible, IR absorption microspectrophotometry / UV, visible, IR absorption microspectrophotometry / UV, visible, IR scattering microspectrophotometry / UV, visible, IR hyperspectral interferometric microscopy / confocal fluorescence microscopy, confocal hyperspectral fluorescence microscopy, confocal Raman microspectroscopy, confocal reflectance microspectroscopy, fluorescence lifetime confocal microscopy / fluorescence lifetime widefield microscopy / two and three photons excitation fluorescence microscopy / two and three photons excitation fluorescence lifetime microscopy / Coherent anti-Stokes Raman scattering microscopy / two (and three) photons second (and third) harmonic generation microscopy / stimulated Raman scattering microscopy, Scanning Electron Microscopy / X ray fluorescence microscopy.

3. The system of claim 1 or claim 2, wherein the second imaging device (50) comprises one of: UV, visible, IR and multispectral brightfield microscopy / UV, visible, IR and multispectral darkfield microscopy / UV, visible, IR and multispectral phase contrast microscopy / UV, visible, IR and multispectral differential interference contrast microscopy / UV, visible, IR and multispectral epi-fluorescence widefield microscopy / UV, visible, IR absorption microspectrophotometry / UV, visible, IR absorption microspectrophotometry / UV, visible, IR scattering microspectrophotometry / UV, visible, IR hyperspectral interferometric microscopy / confocal fluorescence microscopy, confocal hyperspectral fluorescence microscopy, confocal Raman microspectroscopy, confocal reflectance microspectroscopy, fluorescence lifetime confocal microscopy / fluorescence lifetime widefield microscopy / two and three photons excitation fluorescence microscopy / two and three photons excitation fluorescence lifetime microscopy / Coherent anti-Stokes Raman scattering microscopy / two (and three) photons second (and third) harmonic generation microscopy / stimulated Raman scattering microscopy, Scanning Electron Microscopy / X ray fluorescence microscopy, different to the first.

4. The system of any of claims 1 to 3, further comprising a sample retention mechanism (72).

5. The system of claim 4, wherein the sample retention mechanism comprises a sample slide holder (72).

6. The system of any preceding claim, wherein the imaging devices (50) are each located at discrete positions on a single planar surface.

7. The system of any preceding claim, further comprising a sample storage area (60).

8. The system of any preceding claim, wherein the pick and place robot is for selectively moving the selected sample from the sample storage area (60) to the mechanism (70) for translating the sample relative to each of the first and second imaging devices (50).

9. The system of any preceding claim, wherein the pick and place robot comprises the mechanism (70) for translating the sample relative to each of the first and second imaging devices (50) and is for selectively moving the sample from the sample storage area (60) directly to the first and second imaging devices (50).

10. The system of any preceding claim, further comprising a sample support associated with each imaging device for receiving the selected sample and for positioning the sample at a specified X-Y position in the field of view of the imaging device (50).

11. The system of claim 10, wherein the sample support comprises a double stage sample support for lateral X-Y positioning of the sample at a first resolution on the first stage and at a second resolution, finer than the first, on the second stage.

12. The system of any preceding claim, wherein the system is configured for a sample (10) comprising a biological sample (14).

13. The system of any preceding claim, wherein the system is configured for a sample (10) on a sample slide (12).

## Patentansprüche

1. Bildgebungssystem (100) zum Erfassen verschiedener Bilder einer Probe (10), die ein Kalibrierungssymbol (30) einschließt, umfassend:
eine erste Bildgebungsvorrichtung (50) zum Erlangen eines ersten digitalen Bilds (36) der Probe (10) mit einer ersten Bildgebungsmodalität;
eine zweite Bildgebungsvorrichtung (50) zum Erlangen eines zweiten digitalen Bilds (38) der Probe (10) mit einer zweiten Bildgebungsmodalität, die von der ersten verschieden ist;
einen Mechanismus (70) zum Verschieben der Probe relativ zu jeder von der ersten und der zweiten Bildgebungsvorrichtung (50), um die Probe wiederum an einer Bildgebungsposition an jeder von der ersten und der zweiten Bildgebungsvorrichtung (50) zu positionieren; und
einen Prozessor (90), der zu Folgendem konfiguriert ist:
Steuern des Mechanismus (70) zum Verschieben der Probe (10);
Empfangen des ersten digitalen Bilds (36) der Probe (10) von der ersten Bildgebungsvorrichtung (50); und
Empfangen des zweiten digitalen Bilds (38) der Probe (10) von der zweiten Bildgebungsvorrichtung (50), wobei das Bildgebungssystem (100) einen Bestückungsroboter zum selektiven Ergreifen und Bewegen einer ausgewählten Probe zu einer gewünschten Stelle unter der Steuerung des Prozessors (90) umfasst, wobei die Probe ein Kalibrierungssymbol (30) einschließt und der Prozessor (90) ferner dazu konfiguriert ist, das erste und das zweite digitale Bild (36, 38) der Probe durch Folgendes zu kombinieren:
Empfangen eines ersten digitalen Bilds (32) des Kalibrierungssymbols (30) von der ersten Bildgebungsvorrichtung (50); Empfangen eines zweiten digitalen Bilds (34) des Kalibrierungssymbols (30) von der zweiten Bildgebungsvorrichtung (50); Vergleichen der Position des ersten digitalen Bilds (32) des Kalibrierungssymbols mit der Position des zweiten digitalen Bilds (34) desselben Kalibrierungssymbols, wodurch ein Bildversatz (39) zwischen den verschiedenen Bildgebungsvorrichtungen bestimmt wird; Verschieben des zweiten digitalen Bilds (38) der Probe um den bestimmten Versatz (39); und Überlagern des ersten digitalen Bilds (36) der Probe und des verschobenen zweiten digitalen Bilds (38) der Probe, wodurch das erste Bild deckungsgleich zu dem zweiten Bild ist.

2. System nach Anspruch 1, wobei die erste Bildgebungsvorrichtung (50) eines der Folgenden umfasst: UV-, sichtbare, IR- und multispektrale Hellfeldmikroskopie / UV-, sichtbare, IR- und multispektrale Dunkelfeldmikroskopie / UV-, sichtbare, IR- und multispektrale Phasenkontrastmikroskopie / UV-, sichtbare, IR- und multispektrale Differential-Interferenzkontrastmikroskopie / UV-, sichtbare, IR- und multispektrale Epifluoreszenz-Weitfeldmikroskopie / UV-, sichtbare, IR-Absorptionsmikrospektrophotometrie / UV-, sichtbare, IR-Absorptionsmikrospektrophotometrie / UV-, sichtbare, IR-Streuungsmikrospektrophotometrie / UV-, sichtbare, IR-hyperspektrale interferometrische Mikroskopie / konfokale Fluoreszenzmikroskopie, konfokale hyperspektrale Fluoreszenzmikroskopie, konfokale Raman-Mikrospektroskopie, konfokale Reflexionsmikrospektroskopie, Fluoreszenzlebensdauer-Konfokalmikroskopie / Fluoreszenzlebensdauer-Weitfeldmikroskopie / Zwei- und Drei-Photonen-Anregungsfluoreszenzmikroskopie / Zwei- und Drei-Photonen-Anregungsfluoreszenzlebensdauermikroskopie / kohärente Anti-Stokes-Raman-Streuungsmikroskopie / Zwei- (und Drei-) Photonen-Mikroskopie mit Erzeugung der zweiten (und dritten) Harmonischen / stimulierte Raman-Streuungsmikroskopie, Rasterelektronenmikroskopie / Röntgenfluoreszenzmikroskopie.

3. System nach Anspruch 1 oder Anspruch 2, wobei die zweite Bildgebungsvorrichtung (50) eines der Folgenden umfasst: UV-, sichtbare, IR- und multispektrale Hellfeldmikroskopie / UV-, sichtbare, IR- und multispektrale Dunkelfeldmikroskopie / UV-, sichtbare, IR- und multispektrale Phasenkontrastmikroskopie / UV-, sichtbare, IR- und multispektrale Differential-Interferenzkontrastmikroskopie / UV-, sichtbare, IR- und multispektrale Epifluoreszenz-Weitfeldmikroskopie / UV-, sichtbare, IR-Absorptionsmikrospektrophotometrie / UV-, sichtbare, IR-Absorptionsmikrospektrophotometrie / UV-, sichtbare, IR-Streuungsmikrospektrophotometrie / UV-, sichtbare, IR-hyperspektrale interferometrische Mikroskopie / konfokale Fluoreszenzmikroskopie, konfokale hyperspektrale Fluoreszenzmikroskopie, konfokale Raman-Mikrospektroskopie, konfokale Reflexionsmikrospektroskopie, Fluoreszenzlebensdauer-Konfokalmikroskopie / Fluoreszenzlebensdauer-Weitfeldmikroskopie / Zwei- und Drei-Photonen-Anregungsfluoreszenzmikroskopie / Zwei- und Drei-Photonen-Anregungsfluoreszenzlebensdauermikroskopie / kohärente Anti-Stokes-Raman-Streuungsmikroskopie / Zwei- (und Drei-) Photonen-Mikroskopie mit Erzeugung der zweiten (und dritten) Harmonischen / stimulierte Raman-Streuungsmikroskopie, Rasterelektronenmikroskopie / Röntgenfluoreszenzmikroskopie, verschieden von der ersten.

4. System nach einem der Ansprüche 1 bis 3, ferner umfassend einen Probenrückhaltemechanismus (72).

5. System nach Anspruch 4, wobei der Probenrückhaltemechanismus einen Probenträgerhalter (72) umfasst.

6. System nach einem vorhergehenden Anspruch, wobei sich die Bildgebungsvorrichtungen (50) jeweils an diskreten Positionen auf einer einzelnen ebenen Oberfläche befinden.

7. System nach einem vorhergehenden Anspruch, ferner umfassend einen Probenlagerbereich (60).

8. System nach einem vorhergehenden Anspruch, wobei der Bestückungsroboter zum selektiven Bewegen der ausgewählten Probe von dem Probenlagerbereich (60) zu dem Mechanismus (70) zum Verschieben der Probe relativ zu jeder von der ersten und der zweiten Bildgebungsvorrichtung (50) dient.

9. System nach einem vorhergehenden Anspruch, wobei der Bestückungsroboter den Mechanismus (70) zum Verschieben der Probe relativ zu jeder von der ersten und der zweiten Bildgebungsvorrichtung (50) umfasst und zum selektiven Bewegen der Probe von dem Probenlagerbereich (60) direkt zu der ersten und der zweiten Bildgebungsvorrichtung (50) dient.

10. System nach einem vorhergehenden Anspruch, ferner umfassend eine Probenstütze, die jeder Bildgebungsvorrichtung zugeordnet ist, zum Aufnehmen der ausgewählten Probe und zum Positionieren der Probe an einer vorgegebenen X-Y-Position in dem Sichtfeld der Bildgebungsvorrichtung (50).

11. System nach Anspruch 10, wobei die Probenstütze eine zweistufige Probenstütze zur lateralen X-Y-Positionierung der Probe mit einer ersten Auflösung auf der ersten Stufe und mit einer zweiten Auflösung, die feiner als die erste ist, auf der zweiten Stufe umfasst.

12. System nach einem vorhergehenden Anspruch, wobei das System für eine Probe (10) konfiguriert ist, die eine biologische Probe (14) umfasst.

13. System nach einem vorhergehenden Anspruch, wobei das System für eine Probe (10) auf einem Probenträger (12) konfiguriert ist.

## Revendications

1. Système d'imagerie (100) pour capturer différentes images d'un échantillon (10) comprenant un symbole d'étalonnage (30), comprenant :
un premier dispositif d'imagerie (50) pour acquérir une première image numérique (36) de l'échantillon (10) avec une première modalité d'imagerie ;
un second dispositif d'imagerie (50) pour acquérir une seconde image numérique (38) de l'échantillon (10) avec une seconde modalité d'imagerie, différente de la première ;
un mécanisme (70) pour translater l'échantillon par rapport à chacun des premier et second dispositifs d'imagerie (50) afin de positionner l'échantillon, à son tour, au niveau d'une position d'imagerie au niveau de chacun des premier et second dispositifs d'imagerie (50) ; et
un processeur (90) configuré pour :
commander le mécanisme (70) de translation de l'échantillon (10) ;
recevoir la première image numérique (36) de l'échantillon (10) provenant du premier dispositif d'imagerie (50) ; et
recevoir la seconde image numérique (38) de l'échantillon (10) du second dispositif d'imagerie (50), ledit système d'imagerie (100) comprenant un robot de prélèvement et de placement pour saisir et déplacer sélectivement un échantillon sélectionné vers un emplacement souhaité, sous le commandement du processeur (90), l'échantillon comprenant un symbole d'étalonnage (30) et le processeur (90) étant en outre configuré pour combiner les première et seconde images numériques (36, 38) de l'échantillon en :
recevant une première image numérique (32) du symbole d'étalonnage (30) provenant du premier dispositif d'imagerie (50) ; recevant une seconde image numérique (34) du symbole d'étalonnage (30) provenant du second dispositif d'imagerie (50) ; comparant la position de la première image numérique (32) du symbole d'étalonnage avec la position de la seconde image numérique (34) du même symbole d'étalonnage, déterminant ainsi un décalage d'image (39) entre les différents dispositifs d'imagerie ; translatant la seconde image numérique (38) de l'échantillon du décalage déterminé (39) ; et superposant la première image numérique (36) de l'échantillon et la seconde image numérique traduite (38) de l'échantillon, la première image étant en alignement avec la seconde image.

2. Système de la revendication 1, dans lequel le premier dispositif d'imagerie (50) comprend l'un parmi : microscopie UV, visible, IR et à champ lumineux multispectral/microscopie UV, visible, IR et à champ sombre multispectral/microscopie UV, visible, IR et à contraste de phase multispectrale/microscopie UV, visible, IR et à contraste d'interférence différentielle multispectrale/microscopie UV, visible, IR et à épi-fluorescente multispectrale/microspectrophotométrie UV, visible, IR à absorption/microspectrophotométrie UV, visible, IR à absorption/ microspectrophotométrie UV, visible, IR à diffusion /microscopie interférométrique hyperspectrale UV, visible, IR/microscopie à fluorescence confocale, microscopie à fluorescence hyperspectrale confocale, microspectroscopie Raman confocale, microspectroscopie à réflectance confocale, microscopie confocale à vie de fluorescence/microscopie à large champ à vie de fluorescence/microscopie à fluorescence d'excitation à deux et trois photons/microscopie à vie de fluorescence d'excitation à deux et trois photons/microscopie à diffusion Raman anti-Stokes cohérente/microscopie à diffusion Raman à deux (et trois) photons de deuxième (et troisième) génération harmonique/microscopie à diffusion Raman stimulée, microscopie électronique à balayage/microscopie à fluorescence à rayon X.

3. Système de la revendication 1 ou de la revendication 2, dans lequel le second dispositif d'imagerie (50) comprend l'un parmi : microscopie UV, visible, IR et à champ lumineux multispectral/microscopie UV, visible, IR et à champ sombre multispectral/microscopie UV, visible, IR et à contraste de phase multispectrale/microscopie UV, visible, IR et à contraste d'interférence différentielle multispectrale/microscopie UV, visible, IR et à épi-fluorescente multispectrale/microspectrophotométrie UV, visible, IR à absorption/microspectrophotométrie UV, visible, IR à absorption/ microspectrophotométrie UV, visible, IR à diffusion /microscopie interférométrique hyperspectrale UV, visible, IR/microscopie à fluorescence confocale, microscopie à fluorescence hyperspectrale confocale, microspectroscopie Raman confocale, microspectroscopie à réflectance confocale, microscopie confocale à vie de fluorescence/microscopie à large champ à vie de fluorescence/microscopie à fluorescence d'excitation à deux et trois photons/microscopie à vie de fluorescence d'excitation à deux et trois photons/microscopie à diffusion Raman anti-Stokes cohérente/microscopie à diffusion Raman à deux (et trois) photons de deuxième (et troisième) génération harmonique/microscopie à diffusion Raman stimulée, microscopie électronique à balayage/microscopie à fluorescence à rayon X, différent du premier.

4. Système de l'une quelconque des revendications 1 à 3, comprenant en outre un mécanisme de rétention d'échantillon (72).

5. Système de la revendication 4, dans lequel le mécanisme de rétention d'échantillon comprend un élément de maintien de lame d'échantillon (72).

6. Système d'une quelconque revendication précédente, dans lequel les dispositifs d'imagerie (50) sont chacun situés au niveau de positions discrètes sur une seule surface plane.

7. Système d'une quelconque revendication précédente, comprenant en outre une zone de stockage d'échantillon (60).

8. Système d'une quelconque revendication précédente, dans lequel le robot de prélèvement et de placement sert à déplacer sélectivement l'échantillon sélectionné à partir de la zone de stockage d'échantillon (60) jusqu'au mécanisme (70) pour translater l'échantillon par rapport à chacun des premier et second dispositifs d'imagerie (50).

9. Système d'une quelconque revendication précédente, dans lequel le robot de prélèvement et de placement comprend le mécanisme (70) pour translater l'échantillon par rapport à chacun des premier et second dispositifs d'imagerie (50) et sert à déplacer sélectivement l'échantillon à partir de la zone de stockage d'échantillon (60) directement jusqu'aux premier et second dispositifs d'imagerie (50).

10. Système d'une quelconque revendication précédente, comprenant en outre un support d'échantillon associé à chaque dispositif d'imagerie pour recevoir l'échantillon sélectionné et pour positionner l'échantillon au niveau d'une position X-Y spécifiée dans le champ de vision du dispositif d'imagerie (50).

11. Système de la revendication 10, dans lequel le support d'échantillon comprend un support d'échantillon à deux étages pour un positionnement latéral X-Y de l'échantillon à une première résolution sur le premier étage et à une seconde résolution, plus fine que la première, sur le second étage.

12. Système d'une quelconque revendication précédente, dans lequel le système est configuré pour un échantillon (10) comprenant un échantillon biologique (14).

13. Système d'une quelconque revendication précédente, dans lequel le système est configuré pour un échantillon (10) sur une lame d'échantillon (12).
